**Europäisches Patentamt**

**European Patent Office**

**Office européen des brevets**

(19)

(11) Veröffentlichungsnummer: **0 166 845**
**B1**

(12)

# EUROPÄISCHE PATENTSCHRIFT

(45) Veröffentlichungstag der Patentschrift:
**16.09.87**

(51) Int. Cl.⁴: **B 23 C 3/06**

(21) Anmeldenummer: **84890103.9**

(22) Anmeldetag: **01.06.84**

(54) **Fräsmaschine.**

(43) Veröffentlichungstag der Anmeldung:
**08.01.86 Patentblatt 86/2**

(45) Bekanntmachung des Hinweises auf die Patenterteilung:
**16.09.87 Patentblatt 87/38**

(84) Benannte Vertragsstaaten:
**AT DE FR GB IT**

(56) Entgegenhaltungen:
DE - A - 2 419 554
DE - A - 2 808 880
DE - B - 1 910 404
US - A - 2 643 570
US - A - 3 516 306

(73) Patentinhaber: **GFM Gesellschaft für Fertigungstechnik und Maschinenbau Gesellschaft m.b.H., Ennserstrasse 14, A-4403 Steyr (AT)**

(72) Erfinder: **Blaimschein, Gottfried, Dipl.-Ing., Arnhalmweg 33, A-4407 Steyr (AT)**
Erfinder: **Marzy, Otto, St. Ulrich 276, A-4400 Steyr (AT)**
Erfinder: **Dietachmayr, Harald, Ebenboden 118, A-4452 Ternberg (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

**Beschreibung**

Die Erfindung betrifft eine Fräsmaschine mit einem Maschinenbett, einem oder mehreren ringförmigen, innenschneidenden Werkzeugen und zwei Aufnahmestöcken, von denen wenigstens einer in Maschinenbettlängsrichtung verschiebbar ist und deren Werkstückaufnahmen zumindest einerseits ein Spannfutter und anderseits einen Axialanschlag aufweisen (DE-A-2808880).

Diese Fräsmaschinen mit Innenfräsern eignen sich vor allem zur Bearbeitung von wellenförmigen Werkstücken, wie Kurbelwellen oder Nockenwellen und haben sich wegen der erreichbaren kurzen Bearbeitungszeit und hohen Bearbeitungsgenauigkeiten bestens bewährt. Auf Grund des ringförmigen, das Werkstück umschliessenden Werkzeuges verlangt allerdings der Werkstückwechsel besondere Massnahmen, wobei bisher die Werkzeuge in einer Relativbewegung zu den Aufnahmestöcken über die Werkzeugaufnahmen gefahren werden, um den Platz zwischen den beiden Aufnahmen für ein vertikales Einsetzen bzw. Abnehmen der Werkstücke freizumachen. Dazu ist es notwendig, die Ausladung der Werkstückaufnahmen an die zu überbrückende Gesamtbreite der Fräswerkzeuge abzustimmen und die Durchmesser der Aufnahmen an den Innenkreis der Werkzeuge anzupassen, was zu einer wenig stabilen Werkstückhalterung führt und Platzprobleme für die Konstruktion der Werkzeugaufnahmen mit sich bringt. Ausserdem muss eine über den Frässchlitten hinwegreichende Ladeeinrichtung zum Werkstückwechseln eingesetzt werden, die den Aufwand weiter erhöht.

Der Erfindung liegt daher die Aufgabe zugrunde, diese Mängel zu beseitigen und eine Fräsmaschine der eingangs geschilderten Art zu schaffen, die auf rationelle Weise nicht nur eine stabile Werkstückspannung gewährleistet, sondern darüber hinaus auch ein rasches und einfaches Werkstückwechseln erlaubt.

Die Erfindung löst diese Aufgabe dadurch, dass der spannfutterbestückte Aufnahmestock als Ladespannstock zum axialen Durchführen des Werkstückes durch das oder die Werkzeuge dient und aus seiner gegenüber dem anderen Aufnahmestock durch die Werkstücklänge festgelegten Arbeitsstellung in eine Wechselstellung zurückfahrbar ist, in der das Spannfutter vom benachbarten Werkzeug zumindest den gleichen Abstand besitzt wie in der Arbeitsstellung vom Axialanschlag des anderen Aufnahmestockes. Dieser Ladespannstock lässt sich demnach soweit verschieben, dass neben dem Werkzeug genügend Platz gewonnen wird, um das Werkstück dem Ladespannstock zu übergeben oder zu entnehmen, worauf der das Werkstück einerends klemmende Ladespannstock aus seiner Wechselstellung in die Arbeitsstellung vorfährt und dabei das Werkstück axial durch die Werkzeuge hindurchfädelt. In der Arbeitsstellung wird dann das andere Ende des Werkstückes vom gegenüberliegenden Aufnahmestock erfasst, dessen Axialanschlag die entsprechende axiale Ausrichtung des Werkstückes übernimmt. Die radiale Zentrierung erfolgt durch die vorhandenen Spannfutter oder Zentrierbacken der Werkstückaufnahmen, wobei selbstverständlich zusätzliche Zentrierungen und Abstützungen durch zwischen den Aufnahmestöcken sitzende Lünetten od. dgl. unbeschränkt möglich sind. Dieses axiale Laden der Werkstücke mit Hilfe des Ladespannstockes macht es überflüssig, die Werkzeuge über eine Werkstückaufnahme fahren zu müssen, so dass nun diese Werkstückaufnahmen unabhängig von den Abmessungen der Werkzeuge dimensioniert und hinsichtlich einer stabilen Werkstückabstützung ausgelegt werden können. Darüber hinaus braucht der Werkstückwechsel nicht mehr über den Frässchlitten hinweg zu erfolgen, sondern kann bequem neben dem Frässchlitten durchgeführt werden, was auch den Aufwand für die Ladeeinrichtung selbst herabsetzt. Da zumindest einer der Aufnahmestöcke zur Anpassung der Spannweite an die Länge der zu bearbeitenden Werkstücke ohnehin verschiebbar sein muss, lässt sich auf einfache Weise aus den bekannten Aufnahmestöcken ein Ladespannstock machen, wenn diesen ein entsprechend weiter, von einer Arbeitsstellung in eine Wechselstellung reichender Verschiebeweg zugeordnet wird und sie ein das Werkstück einerends aufnehmendes Spannfutter erhalten. Die Werkstückbearbeitung selbst bleibt unbeeinflusst und Werkzeugführung und Werkzeugschlitten sind frei wählbar.

Um dem Ladespannstock in seiner Wechselstellung die Werkstücke übergeben bzw. abnehmen zu können, ist eine geeignete Ladeeinrichtung erforderlich, und es muss dafür gesorgt sein, dass der Ladespannstock mit seinem Spannfutter das Werkstück in zentrierter Lage erfassen kann. Bei entsprechendem Aufwand lässt sich dies durch einen Laderoboter verwirklichen, der das Werkstück in die exakte Ladeposition bringt, doch ergibt sich eine besonders einfache Lademöglichkeit, wenn erfindungsgemäss im Bereich zwischen der Ladespannstock-Wechselstellung und dem benachbarten Werkzeug eine absenkbare oder wegschwenkbare Werkstückauflage zur Vorzentrierung des Werkstückes beim Werkstückwechsel vorgesehen ist. Mit einer üblichen Ladezange od. dgl. kann so das Werkstück auf diese Werkstückauflage und auf eine entsprechende Spannfutter-Vorzentrierbacke des Ladespannstockes aufgelegt werden, so dass es automatisch zu einem zentrierten Spannen des Werkstückes durch den Ladespannstock kommt. Sobald das Werkstück vom Spannfutter des Ladespannstockes erfasst ist, wird die Werkstückauflage abgesenkt oder weggeschwenkt, um die Ladespannstockbewegung nicht zu behindern. Die Werkstückaufnahme kann aus einer einfachen Zentrierschale bestehen, die das Werkstück nur zusammen mit der Zentrierbacke des Spannfutters hält, sie kann aber auch als Auflagegabel für eine eigenständige Werkstückhalterung ausgebildet sein.

Gemäss einer weiteren Ausgestaltung der Erfindung ist der Ladespannstock zumindest mit einem das Spannfutter aufnehmenden Kopfteil um eine zur Verschieberichtung normale Achse drehbar. Dadurch kann der Ladespannstock in seiner Wechselstellung das Werkstück schwenken und beispielsweise in den Bereich des Förderbandes od. dgl.

Transportmittels für den Zu- und Abtransport der Werkstücke bringen, so dass eine gesonderte Ladeeinrichtung überflüssig ist. Um ein solches Verschwenken des Werkstückes zu erreichen, kann der Ladespannstock mit einem entsprechend drehbaren Kopfteil ausgestattet sein, es ist aber auch möglich, den ganzen Ladespannstock durch eine Art Drehtisch im Bereich der Maschinenbettführung zu schwenken.

Um den axialen Ladevorgang zu beschleunigen und Beschädigungen zu verhindern, kann die Werkstückaufnahme des den Axialanschlag bildenden Aufnahmestockes eine axial bewegliche, vorzugs-weise hydraulisch beaufschlagbare Pinole aufwei-sen, über die durch Endschalter od. dgl. die Ladebewegungen des Ladespannstockes kontrollierbar sind. Um den massigen Ladespannstock genau manövrieren zu können und mit diesem Ladespannstock das Werkstück exakt an den Axialanschlag heranzuführen, dürfen die Verschiebebewegungen vor allem in den Endphasen nur sehr langsam erfolgen. Die Pinole erlaubt es dabei diese Endphase möglichst kurz zu halten und damit den Ladevorgang zu beschleunigen, da der Ladespannstock bis zum Kontakt des Werkstückes mit der entsprechend weit vorragenden Pinole im Schnellgang verfahren kann, dann erst automatisch durch ein Zurückbewegen der Pinole verlangsamt zu werden braucht und exakt an den Axialanschlag herangesteuert wird, wozu die Pinole über Endschalter od. dgl. entsprechende Steuerimpulse setzt. Das Werkstück wird dadurch nicht nur schnell axial ausgerichtet, sondern durch die Pinole auch zusätzlich radial zentriert, was die Einspannverhältnisse wesentlich vereinfacht.

Besonders günstig ist es, wenn beide Aufnahmestöcke mit hydraulisch beaufschlagbaren Pinolen ausgestattet sind, wobei vorzugsweise der Pinole des Ladespannstockes ein verstellbarer Endanschlag zugeordnet ist. Das Zusammenwirken dieser beiden Pinolen erlaubt eine weitere Verbesserung des axialen Ausrichtens, da das entsprechend nahe herangeführte Werkstück in der Endphase des Ladevorganges zwischen die Pinolen gespannt werden kann und sich bei geöffnetem Spannfutter durch geeignete Druckbeaufschlagung der ladespannstockseitigen Pinole eine feinfühlige Ausrichtung unabhängig von der Ladespannstockbewegung erreichen lässt. Der Ladespannstock selbst braucht dadurch nur ohne Rücksichtnahme auf das Ausrichten in seine Arbeitsstellung gefahren zu werden, in der das Spann-futter wieder schliesst. Ein Anschlag für die Pinole ermöglicht eine an das jeweils vorhandene Werkstück genau angepasste Pinolenbetätigung. Sind ausserdem beide Werkzeugaufnahmen als Spannfutter ausgebildet, wird auf Grund der Pinole des Ladespannstockes auch das ladespannstockseitige Werkstückende bearbeitbar, da dann das Werkstück ladespannstockseitig ohne Einsatz des Spannfutters nur mit der Pinole gehalten werden kann. Das Spannfutter des Ladespannstockes lässt sich dabei zur Stabilisierung auf die Pinole spannen.

In der Zeichnung ist der Erfindungsgegenstand beispielsweise rein schematisch dargestellt, und zwar zeigen die

Fig. 1 bis 3 eine erfindungsgemässe Fräsmaschine während dreier Phasen des Ladevorganges in Vorderansicht und

Fig. 4 ein abgeändertes Ausführungsbeispiel des Ladespannstockes dieser Fräsmaschine ebenfalls in Vorderansicht.

Auf einem Maschinenbett 1 sitzt ein Querschlitten 2, auf dem ein Fräsaggregat 3 mit ringförmigen innenschneidenden Werkzeugen 4 der Höhe nach verfahrbar geführt ist. Beidseitig des Querschlittens 2 sind zwei Aufnahmestöcke 5, 6 für das Werkstück W längsverschiebbar angeordnet, wobei der eine Aufnahmestock 5 entsprechend der jeweiligen Spannstelle am Werkstück oder für den Werkzeugwechsel verstellt wird, der andere Aufnahmestock 6 hingegen als Ladespannstock dient und aus seiner Arbeitsstellung, in der das Werkstück W zwischen den beiden Aufnahmestöcken 5, 6 gespannt wird, in eine Wechselstellung zurückfahrbar ist, in der das Werkstück W, ohne durch das Fräsaggregat 3 behindert zu werden, eingelegt oder abgenommen werden kann. Der Ladespannstock 6 ist mit einem Spannfutter 7 ausgestattet und weist zusätzlich eine hydraulisch beaufschlagbare Pinole 8 auf, für die ein Stempel 9 einen Endanschlag bildet. Der gegenüberliegende Aufnahmestock 5 besitzt ebenfalls ein Spannfutter 10 sowie eine hydraulisch beaufschlagbare Pinole 11 und zur Ausrichtung des Werkstückes W gibt es einen Axialanschlag 12.

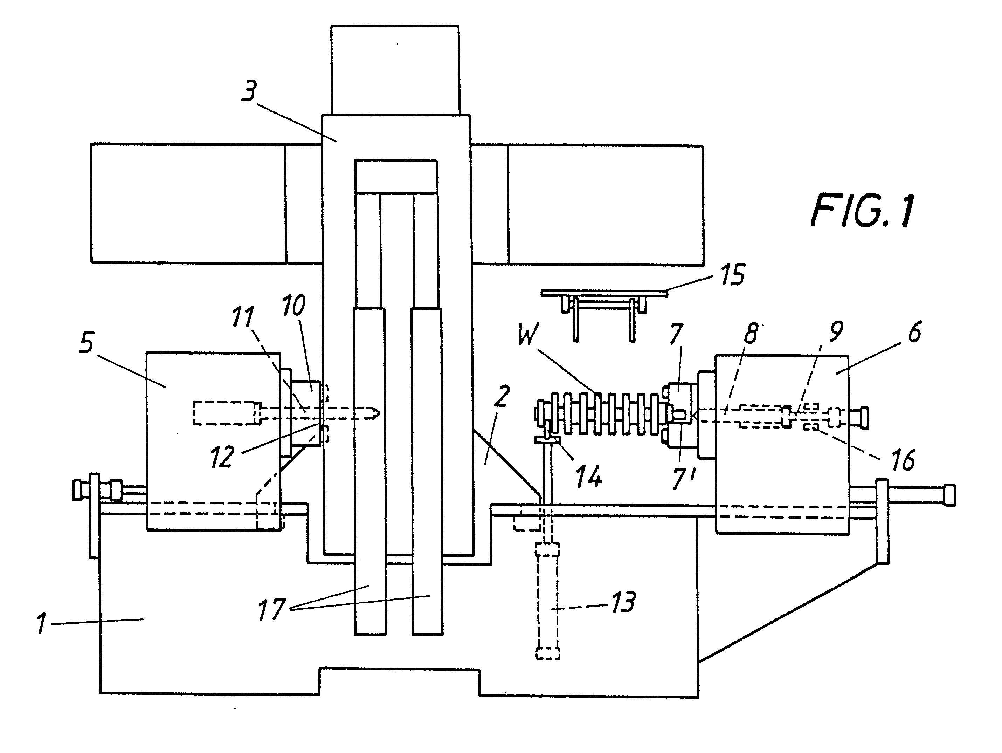

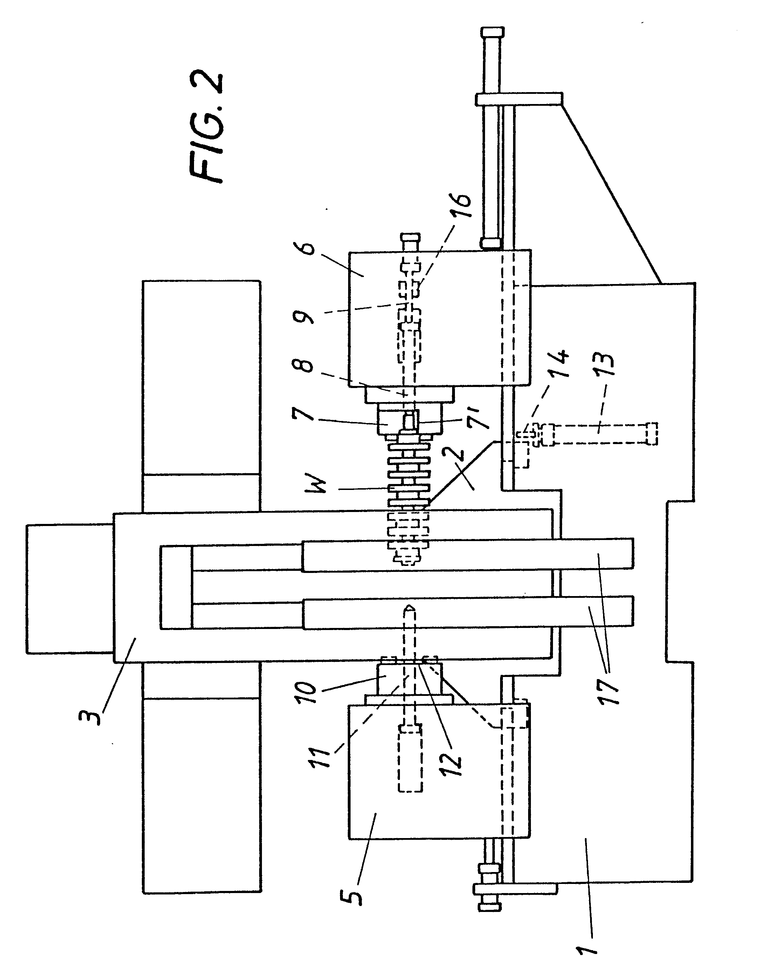

Zum Einlegen eines Werkstückes wird der Ladespannstock 6 in seine Wechselstellung zurückgefahren, die Pinole 8 ist zurückgezogen und das Spannfutter 7 geöffnet. Eine im Bereich der Arbeits-stellung des Ladespannstockes vorgesehene Werk-stückauflage 13 wird mit ihrer Zentrierschale 14 hochgefahren und das Werkstück über eine Ladeeinrichtung 15 von oben einerseits in die Zentrierschale 14 der Werkstückauflage 13 und anderseits in eine Vorzentrierbacke 7' des Spannfutters 7 gelegt (Fig. 1). Nun schliesst das Spannfutter 7 des Ladespannstockes 6 und die Werkstückauflage 13 zieht die Zentrierschale 14 zurück. Die Pinole 8 des Ladespannstockes 6 wird druckbeaufschlagt und an den Wellenstummel des Werkstückes W angelegt, worauf auch der Endanschlag 9 vorfährt und in dieser Lage mittels Klemmbacken 16 fixiert wird. Der Ladespannstock 6 verfährt nun das frei vorkragende Werkstück W axial durch die ringförmigen Werkzeuge 4 des Fräsaggregates 3 in Richtung Aufnahmestock 5 (Fig. 2). Sobald das freie Werkstückende die ausgefahrene Pinole 11 des Aufnahmestockes 5 berührt und zurückdrängt, wird das Spannfutter 7 am Ladespannstock 6 entspannt, so dass die Pinole 8 des Ladespannstockes 6 durch entsprechende Druckbeaufschlagung das Werkstück W gegen den Druck der Pinole 11 bis an den Axialanschlag 12 des Aufnahmestockes 5 schiebt, während gleichzeitig der Ladespannstock 6 bis in seiner Arbeitsstellung gefahren und hier geklemmt wird. Durch dieses axiale Ausrichten des Werkstückes W mit Hilfe der Pinolen 8 und 11 lässt sich der Ladespannstock 6 relativ schnell verfahren und ohne Beschädigungsgefahr dennoch eine exakte Axialausrichtung des Werkstückes W erreichen. Ist die axiale Anlage des Werkstückes W quittiert, was über nicht weiter dargestellte Endschalter od. dgl. durch die Pinole 11 geschieht, und der Ladespannstock 6 in seiner Arbeitsstellung fixiert, wird das Werkstück durch das Spannfutter 7 des Ladespannstockes radial ausgerichtet und beide Spannfutter 7, 10 spannen das Werkstück auf den ihnen zugeordneten Abschnitten. Die zur zusätzlichen Abstützung des Werkstückes W vorgesehenen Lünetten 17 werden gesetzt und die Fräsbearbeitung wird vorgenommen.

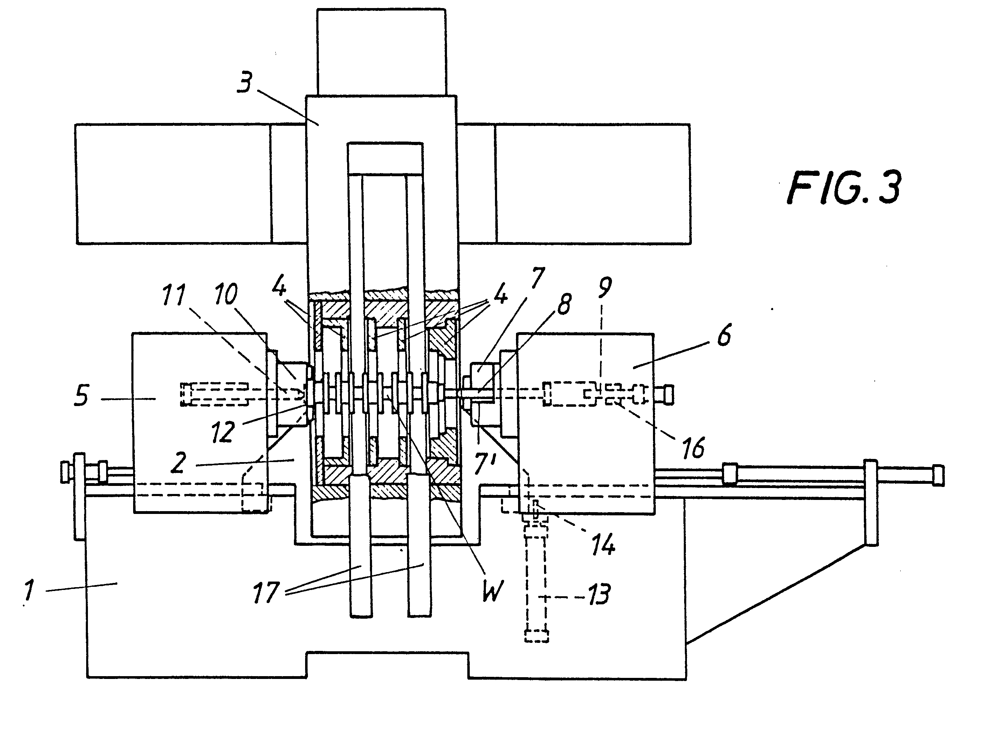

Soll, wie in Fig. 3 angedeutet, auch das ladespannstockseitige Ende des Werkstückes W mitbearbeitet werden, wird das Werkstück nach dem Quittieren der Anlage am Axialanschlag 12 durch die ladespannstockseitige Lünette 17 radial ausgerichtet, worauf das Spannfutter 10 des Aufnahmestockes 5 den entsprechenden Werkstückendabschnitt spannt, das Spannfutter 7 des Ladespannstockes 6 hingegen auf die entsprechend vorragende Pinole 8 spannt.

Nach der Bearbeitung öffnen Lünetten und Spannfutter und die Druckbeaufschlagung der Pinole 8 des Ladespannstockes 6 wird abgesenkt, so dass das Werkstück von der Pinole 11 des Aufnahmestockes 5 vorgedrückt werden kann, bis die Pinole 8 den Anschlag erreicht hat. Nun schliesst das Spannfutter 7 des Ladespannstockes 6 und der Ladespannstock 6 fährt nach Lösen der Klemmung am Maschinenbett 1 aus seiner Arbeitsstellung zurück in die Wechselstellung. Die Werkstückauflage 13 wird hochgefahren und das freie Ende des Werkstückes W durch die Zentrierschale 14 abgestützt. Die Klemmbacken 16 öffnen und der Endanschlag 9 und die Pinole 8 des Ladespannstockes 6 werden zurückgezogen. Nun öffnet auch das Spannfutter 7 und das nur mehr von der Zentrierschale 14 der Werkstückauflage 13 und dem Zentrierbacken 7' des Spannfutters 7 unterstützte Werkstück W ist frei zur Entnahme mittels der Ladeeinrichtung 15, mit der auch gleich wieder ein neues Werkstück eingelegt werden kann (Fig. 1).

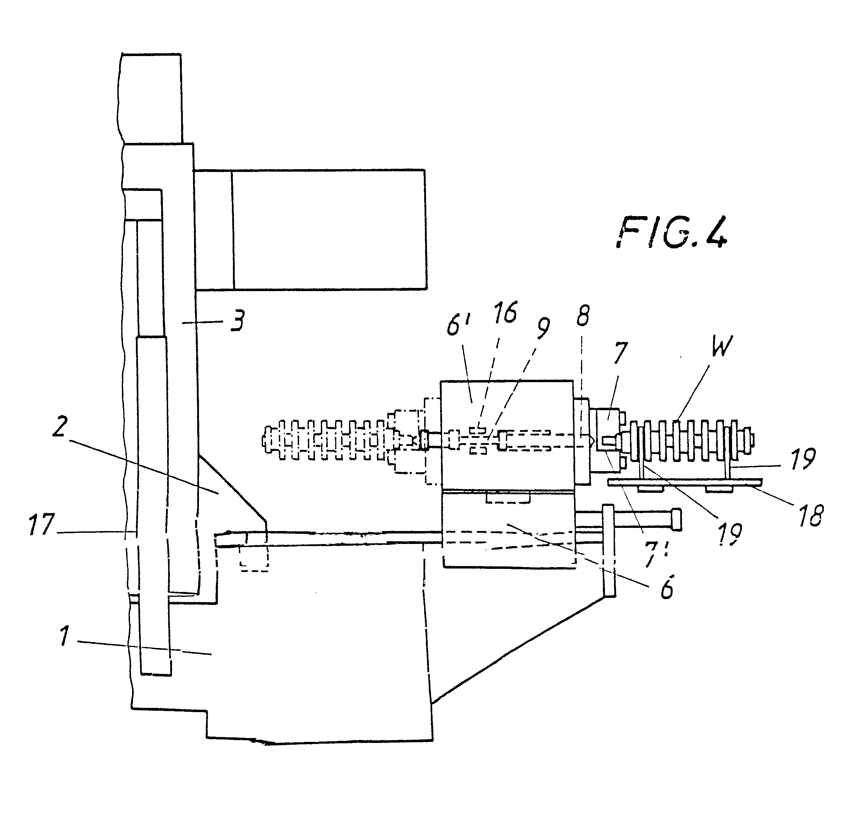

Wie in Fig. 4 angedeutet, kann der Ladespannstock 6 zur Aufnahme des Spannfutters 7 auch einen um eine Vertikalachse drehbaren Kopfteil 6' aufweisen, so dass in der Wechselstellung das im Spannfutter 7 gehaltene Werkstück W aus der eigentlichen, zum Aufnahmestock 5 hin gerichteten Ladeposition heraus in eine bestimmte Übernahmeposition verschwenkt werden kann, in der das Spannfutter 7 im Bereich einer Förderanlage 18 für den An- und Abtransport der Werkstück W liegt. Durch diesen verschwenkbaren Kopfteil 6' sind eine vorzentrierende Werkstückauflage 13 genauso wie eine eigene Ladeeinrichtung 15 unnötig, und es muss nur für eine ordnungsgemässe Übergabe des Werkstückes zwischen Förderanlage 18 und Spannfutter 7 gesorgt werden, was beispielsweise durch einfache, von der Förderanlage 18 hochfahrbare Hebearme 19 und ein darauf abgestimmtes Verschieben des Ladespannstockes 6 zum Erfassen und Ablegen des Werkstückes zu verwirklichen ist.

Durch den Ladespannstock 6 kann das Werkstück W axial durch die ringförmigen Werkzeuge 4 hindurchgeführt und auf rationelle Weise ein axiales Laden erreicht werden. Die Nebenzeiten auf Grund des Werkstückwechsels bleiben dadurch gering, die Aufnahmestöcke brauchen keine durch die Werkzeuge hindurchpassenden vorkragenden Futter mehr aufzuweisen und aufwendige Ladeeinrichtungen sind unnötig. Bei aufwandsarmer Konstruktion wird eine vibrationsfeste, stabile Werkstückabstützung sichergestellt.

**Patentansprüche**

1. Fräsmaschine mit einem Maschinenbett (1), einem oder mehreren ringförmigen, innenschneidenden Werkzeugen (4) und zwei Aufnahmestöcken (5, 6), von denen wenigstens einer (6) in Maschinenbettlängsrichtung verschiebbar ist und deren Werkstückaufnahmen zumindest einerseits ein Spannfutter (7) und anderseits einen Axialanschlag (12) aufweisen, dadurch gekennzeichnet, dass der spannfutterbestückte Aufnahmestock (6) als Ladespannstock zum axialen Durchführen des Werkstückes (W) durch das oder die Werkzeuge (4) dient und aus seiner gegenüber dem anderen Aufnahmestock (5) durch die Werkstücklänge festgelegten Arbeitsstellung in eine Wechselstellung zurückfahrbar ist, in der das Spannfutter (7) vom benachbarten Werkzeug (4) zumindest den gleichen Abstand besitzt wie in der Arbeitsstellung vom Axialanschlag (12) des anderen Aufnahmestockes.

2. Fräsmaschine nach Anspruch 1, dadurch gekennzeichnet, dass im Bereich zwischen der Ladespannstock-Wechselstellung und dem benachbarten Werkzeug (4) eine absenkbare oder wegschwenkbare Werkstückauflage (13) zur Vorzentrierung des Werkstückes (W) beim Werkstückwechsel vorgesehen ist.

3. Fräsmaschine nach Anspruch 1, dadurch gekennzeichnet, dass der Ladespannstock (6) zumindest mit einem das Spannfutter (7) aufnehmenden Kopfteil (6') um eine zur Verschieberichtung normale Achse drehbar ist.

4. Fräsmaschine nach einem der Ansprüche 1 bis 3, dadurch gekennzeichnet, dass die Werkstückaufnahme (10) des den Axialanschlag (12) bildenden Aufnahmestockes (5) eine axial bewegliche, vorzugsweise hydraulisch beaufschlagbare Pinole (11) aufweist, über die durch Endschalter od. dgl. die Ladebewegungen des Ladespannstockes (6) kontrollierbar sind.

5. Fräsmaschine nach einem der Ansprüche 1 bis 4, dadurch gekennzeichnet, dass beide Aufnahmestöcke (5, 6) mit hydraulisch beaufschlagbaren Pinolen (11, 8) ausgestattet sind, wobei vorzugsweise der Pinole (8) des Ladespannstockes (6) ein verstellbarer Endanschlag (9) zugeordnet ist.

**Claims**

1. A milling machine comprising a machine bed (1), one or more internally cutting annular tools (4) and two supports (5, 6), at least one (6) of which is displaceable in the longitudinal direction of the machine bed and which comprise toolholders including at least one chuck (7) on the one hand, and an axial stop (12), on the other hand, characterized in that that of the supports (6) which is provided with a chuck constitutes a loading and clamping support for axially moving the workpiece (W) through the tool or tools (4) and from its working position defined by the length of the workpiece relative to the other support (5) is adapted to be retracted to a change position, in which the chuck (7) is spaced from the adjacent tool (4) by a distance which is at least as large as the distance from the chuck (7) to the axial stop (12) of the other support when the stock (6) is in its working position.

2. A milling machine according to claim 1, characterized in that a workpiece support (13), which is adapted to be lowered or swung away and serves to precentre the workpiece (W) during an exchange of workpieces, is provided in the region between the change position of the loading and clamping support and the adjacent tool (4).

3. A milling machine according to claim 1, characterized in that the loading and clamping support (6) has a head portion (6'), which accommodates the chuck (6), and at least said head portion (6') of the loading and clamping support (6) is rotatable about an axis which is normal to the direction of displacement.

4. A milling machine according to any of claims 1 to 3, characterized in that the workpiece holder (10) of that support which constitutes the axial stop (12) comprises an axially movable sleeve (11), which is preferably hydraulically operable and is adapted to control the loading movements of the loading and clamping support (6) by means of limit switches or the like.

5. A milling machine according to any of claims 1 to 4, characterized in that the two supports (5, 6) are provided with hydraulically operable sleeves (11, 8) and an adjustable end stop (9) is preferably associated with the sleeve (8) of the loading and clamping support (6).

## Revendications

1. Fraiseuse munie d'un banc de machine (1), d'un ou plusieurs outils annulaires (4) coupant intérieurement et de deux poupées (5, 6) dont l'une au moins (6) peut coulisser dans la direction longitudinale du banc de machine et dont les logements de pièce présentent au moins d'une part, un mandrin de serrage (7) et, d'autre part, une butée axiale (12), caractérisée par le fait que la poupée (6), garnie d'un mandrin de serrage, sert de bloc de serrage pour le passage axial de la pièce (W) à travers le ou les outils (4) et peut être ramené en arrière, de sa position de travail fixée relativement à l'autre poupée (5) par la longueur de la pièce, à une position de changement dans laquelle le mandrin de serrage (7) présente, vis-à-vis de l'outil (4) voisin, au moins la même distance que, dans la position de travail, vis-à-vis de la butée axiale (12) de l'autre poupée.

2. Fraiseuse selon la revendication 1, caractérisée par le fait que dans la région entre la position de changement de bloc de serrage et l'outil voisin (4) est prévu un appui de pièce (13) pouvant s'abaisser ou s'écarter pour le centrage préalable de la pièce (W) lors du changement de pièce.

3. Fraiseuse selon la revendication 1, caractérisée par le fait que le bloc de serrage (6) peut tourner, au moins par une partie de tête (6') logeant le mandrin de serrage (7), autour d'un axe normal à la direction de coulissement.

4. Fraiseuse selon l'une des revendications 1 à 3, caractérisée par le fait que le logement de pièce (10) de la poupée (5) formant la butée axiale (12) présente une broche (11) mobile axialement, pouvant de préférence subir une action hydraulique, par l'intermédiaire de laquelle on peut commander, par l'intermédiaire d'interrupteurs de fin de course ou analogues, les mouvements de changement du bloc de serrage (6).

5. Fraiseuse selon l'une des revendications 1 à 4, caractérisée par le fait que les deux poupées (5, 6) sont équipées de broches (11, 8) pouvant subir une action hydraulique, une butée réglable de fin de course (9) étant, de préférence, adjointe à la broche (8) du bloc de serrage (6).

FIG.1

0 166 845

FIG. 2

FIG.3

0 166 845

*FIG.4*

6' 16 9 8 7 W

19

18

19

3

2

17

1

7'

6